# EUROPÄISCHE PATENTSCHRIFT

(11) **EP 1 117 603 B1**
(45) Veröffentlichungstag und Bekanntmachung des Hinweises auf die Patenterteilung: **23.06.2004**
(21) Anmeldenummer: 99969703.0
(22) Anmeldetag: 21.09.1999
(51) Int. Cl.: B65G 47/38

(54) **ANORDNUNG UND VERFAHREN ZUM SORTIEREN VON STÜCKGUT**
DEVICE AND METHOD FOR SORTING PIECE GOODS
DISPOSITIF ET PROCEDE POUR LE TRI D'ARTICLES INDIVIDUELS

(30) Priorität: 28.09.1998 DE 19844478
(43) Veröffentlichungstag der Anmeldung: 25.07.2001
(73) Patentinhaber: Siemens Aktiengesellschaft, 80333 München (DE)
(72) Erfinder: GRUND, Hans-Joachim, D-91056 Erlangen (DE)
(74) Vertreter: Berg, Peter, Dipl.-Ing.
(86) Internationale Anmeldenummer: PCT/DE1999/003009
(87) Internationale Veröffentlichungsnummer: WO 2000/018668

(56) Entgegenhaltungen:
- EP-A- 0 343 613
- EP-A- 0 366 857
- EP-A- 0 700 844
- US-A- 5 335 767
- US-A- 5 642 802

## Beschreibung

Die Erfindung betrifft eine Anordnung und ein Verfahren (siehe z.B. US-A-5 335 767) zum Sortieren von Stückgut nach den Oberbegriffen der unabhängigen Ansprüche.

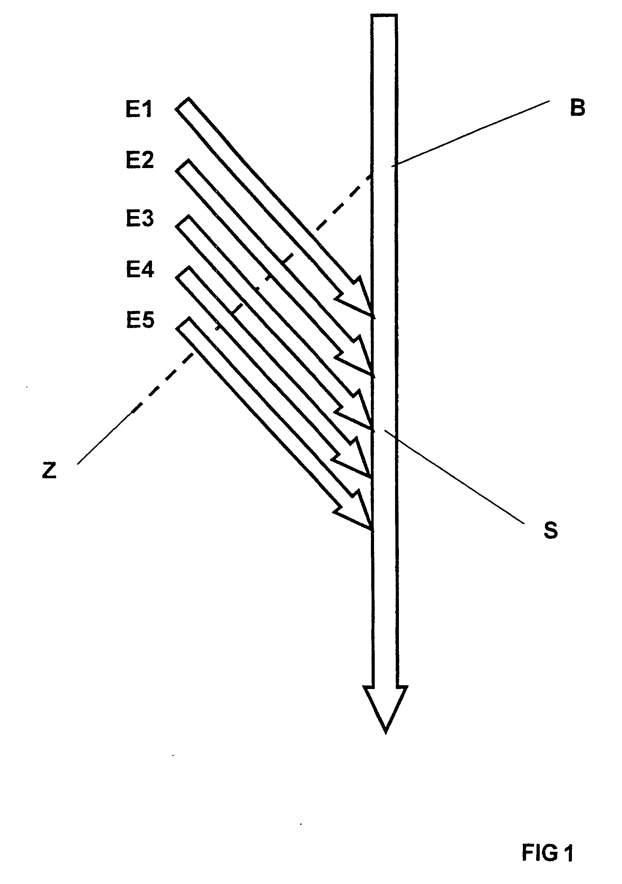

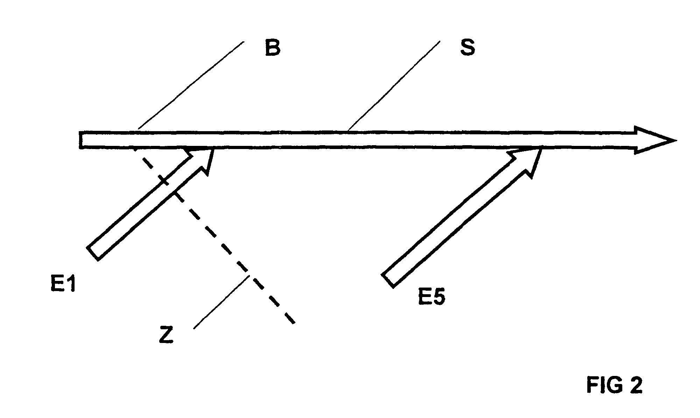

Bei bekannten Kippschalensortierern werden die Kippschalen nicht nach den größten Stückgütern dimensioniert, sondern so, daß der erreichbare Durchsatz und der Anteil der Stückgüter, die zwei Kippschalen belegen, optimal aufeinander abgestimmt sind.
Vor Einschleusung eines Stückgutes für zwei Kippschalen müssen von der Steuerung immer zwei aufeinander folgende leere Schalen reserviert werden. Das gelingt nur zufriedenstellend, wenn die Einschleusestellen nahe beieinander liegen und so eine ausreichende Vorausschau auf die einzuschleusenden Stückgüter dieser Einschleusestellen möglich ist. In der FIG 1 wird das näher erläutert. Es ist ein Sortierer S mit einem Einschleusebereich, der 5 Einschleusestellen E1-E5 besitzt, schematisch dargestellt. Eine Einschleusung folgt unmittelbar auf die andere im Abstand von 2-3 Kippschalen. Die Pfeile charakterisieren die gesamte Einschleuselinie mit entsprechenden Transportmitteln.In diesem Falle kann der Belegungsalgorithmus für die Kippschalen auf die Belegung in allen Einschleuselinien zurückgreifen. Es wird angenommen, daß sich an der Position B des Sortierers S zu einem bestimmten Zeitpunkt eine leere Kippschale befindet. Diese Kippschale wird zum Einschleusen für die Einschleusestellen E1-5 reserviert. Sie benötigt von der Position B bis zur jeweiligen Einschleuseposition die gleiche Zeit wie ein Stückgut auf der jeweiligen Einschleuselinie von einer durch eine Zeitlinie Z festgelegten Position bis zur Einschleuseposition. Alle Stückgüter, die in dem Zeitpunkt, in dem die zu reservierende Kippschale die Position B passiert, auf den Einschleuselinien in Richtung Einschleuseposition transportiert werden und näher an der Einschleuseposition sind als die durch die Linie Z gekennzeichneten Positionen, können also in die Entscheidung, welche Stückgüter zuerst auszuschleusen sind, einbezogen werden. Da sie in Position und Größe bekannt sind, ist es möglich, unter Berücksichtigung des Stückgutstromes auf der Sortierstrecke und der Stückgüter auf allen Einschleuselinien für große Stückgüter zwei aufeinander folgende leere Kippschalen freizuhalten. In vielen Fällen ist aber die kompakte Gruppierung der Einschleusestellen nicht möglich. Ursachen können bauliche Bedingungen oder Anlagen mit mehreren Haupt- und Vorsortierern mit einem wahlfreien Weg der Stückgüter von einer beliebigen Einschleusestelle zu jeder Ausschleusestelle sein. In Folge der weit auseinanderliegenden Eischleusestellen ist eine vorausschauende Reservierung der Kippschalen, speziell für große Stückgüter, nicht mehr möglich, da aus Sicht des Reservierungspunktes die Stückgüter auf den davorliegenden Einschleuselinien nicht bekannt sind. Dies ist in der FIG 2 gut zu erkennen. Hier liegen die Einschleusestellen E1 und E5 mit ihren Einschleuselinien so weit auseinander, daß eine Kippschale, die die Position B passiert, noch nicht für die Einschleusestelle E5 reserviert werden kann, da zu diesem Zeitpunkt noch nicht bekannt ist, ob und wann ein großes Stückgut für zwei Kippschalen eingeschleust werden muß. In der Zeichnung repräsentiert die Länge der Einschleuselinie die Zeit von der Aufnahme des Stückgutes bis zum Einschleusezeitpunkt. Da die Zeitlinie Z die Einschleuselinie der Einschleusestelle E5 nicht schneidet, kann die Reservierung nicht erfolgen. Damit ist es schwer, für große Stückgüter auf der Einschleuselinie der Einschleusestelle E5 zwei hintereinander liegende leere Kippschalen zu finden. Nachfolgende Stückgüter können dann ebenfalls nicht eingeschleust werden Einzelne Kippschalen würden leer diese Einschleusestelle E5 passieren und eine Durchsatzminderung wäre die Folge. Eine bisher durchgeführte vorsorgliche Reservierung von zwei aufeinanderfolgenden leeren Kippschalen konnte das Problem nicht zufriedenstellend lösen, da nicht sichergestellt werden konnte, daß die beiden leeren Kippschalen zum richtigen Zeitpunkt bereit stehen.

Der in den unabhängigen Ansprüchen angegebenen Erfindung liegt deshalb die Aufgabe zugrunde, das Einschleusen von großen, zwei Kippschalen benötigenden Stückgütern in Kippschalensortierer durch rechtzeitige Bereitstellung von zwei leeren aufeinanderfolgenden Kippschalen zu verbessern und dadurch Durchsatzverluste zu vermeiden.

Die Erfindung geht von dem Gedanken aus, bei nur einer leeren Kippschale eine benachbarte, mit einem Stückgut belegte Kippschale zu entleeren, sodaß das große Stückgut eingeschleust werden kann und das zusätzlich ausgeschleuste Stückgut nach der Einschleusestelle wieder auf eine einzelne leere Kippschale einzuschleusen. Dadurch ist eine Vorausschau auf alle Einschleuselinien nicht mehr notwendig und der Einschleusealgorithmus vereinfacht sich.

Nachfolgend wird die Erfindung in einem Ausführungsbeispiel anhand von Zeichnungen näher erläutert.

Dabei zeigen
- FIG 1: eine schematische Darstellung eines Einschleusebereiches mit 5 nebeneinander liegenden Einschleusestellen nach dem Stand der Technik
- FIG 2: eine schematische Darstellung von 2 weit aueinander liegenden Einschleusestellen nach dem Stand der Technik
- FIG 3: eine schematische Darstellung der erfindungsgemäßen Einschleusung eines großen Stückgutes
- FIG 4: eine schematische Darstellung von 5 Einschleusestellen und 2 erfindungsgemäßen Ausschleusestellen mit einer zusätzlichen Einschleusung

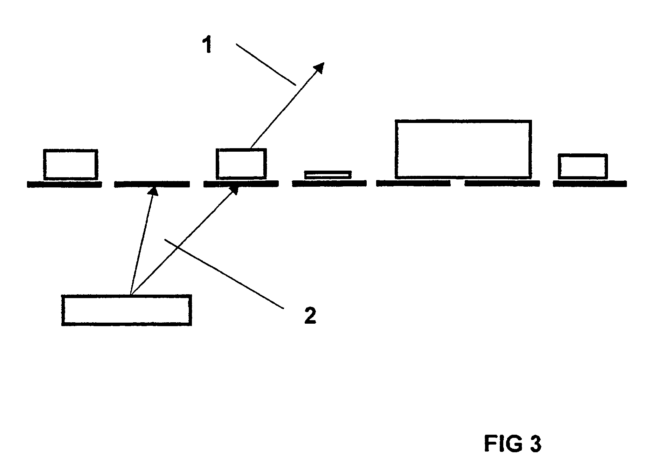

In der FIG 3 ist der erfindungsgemäße Ablauf erläuternd dargestellt. Die Kippschalen KS bewegen sich von links nach rechts. Ein großes Paket GP als Stückgut soll an der durch zwei Pfeile gekennzeichneten Stelle eingeschleust werden. Da nur eine in Frage kommende Kippschale leer ist, wird vor der Eischleusestelle, wie mit dem Pfeil angedeutet, das Normalpaket NP von der benachbarten, in Transportrichtung davor befindlichen Kippschale KS kurz vor der Einschleusung ausgeschleust. Die Entscheidung über ein notwendiges zusätzliches Ausschleusen wird also durch die Steuerungseinrichtung des Kippschalensortierers aus der unmittelbaren Umgebung der jeweiligen Einschleusestelle heraus getroffen. Erkenntnisse über die Belegung der anderen in Transportrichtung davor befindlichen Einschleuselinien sind nicht notwendig, so daß hierfür nur ein sehr einfacher Steuerungsalgorithmus benötigt wird.

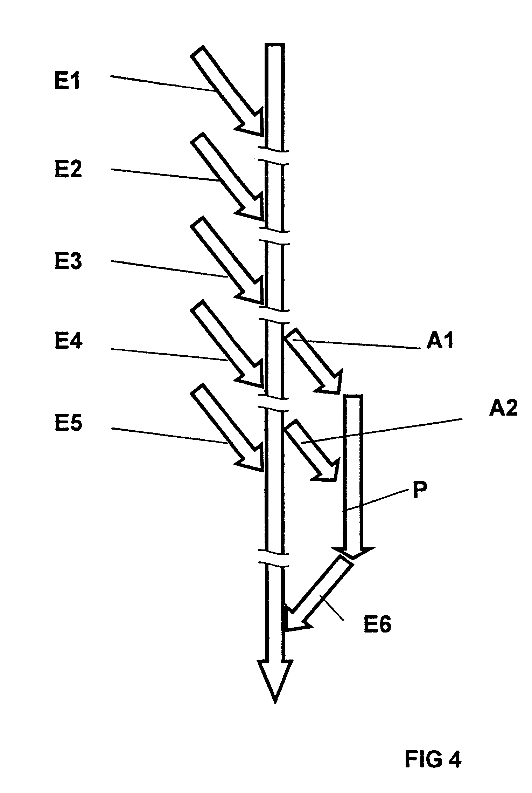

Die FIG 4 zeigt schematisch fünf weit auseinander liegende Einschleusestellen E1-E5. Nur vor den beiden letzten Einschleusestellen E4 und E5 befinden sich zusätzliche Ausschleusestellen A1 und A2, da nur hier der Belegungsgrad so hoch ist, daß sich diese Maßnahme lohnt. Von den zusätzlichen Ausschleusestellen A1 und A2 mit ihren Ausschleuselinien werden die Normalpakete NP auf eine gemeinsame Transportstrecke mit einem Zwischenspeicher P befördert, von der sie dann über eine zusätzliche Einschleusestelle E6 wieder auf eine leere Kippschale gelangen. Dieser Zwischenspeicher P besteht aus mindestens einem im Start-Stop-Betrieb angetriebenen Bereich. Die Anzahl der Zwischenspeicherstufen wird aufgrund des Paketaufkommens so gewählt, daß ein Rückstau vermieden wird, bzw. daß Belastungsspitzen ausgeglichen werden können. Es versteht sich, daß an Stelle von Paketen auch andere Stückgüter, wie z.B. Säcke verarbeitet werden können.

## Patentansprüche

1. Anordnung zum Sortieren von Stückgut mit umlaufenden Kippschalen, Einschleusestellen zum Beladen der Kippschalen, Ausschleusestellen zum Entladen in sortiergerechte Sammelstellen, Sensoren zum Ermitteln des Beladezustandes der Kippschalen, Mitteln zum Lesen der Verteilinformationen und einer Steuerungseinrichtung zur Steuerung der Sortiervorgänge unter Zugrundelegung der aufgenommenen Informationen, **dadurch gekennzeichnet, daß** sich vor mindestens einer Einschleusestelle (E1-E5) eine zusätzliche Ausschleusestelle (A1,A2) zur Ausschleusung von nur auf einer Kippschale (KS) befindlichen Stückgütern (NP) auf eine gemeinsame Transportstrecke mit mindestens einem im Start-Stop-Betrieb angetriebenen Bereich als Zwischenspeicher (P) befindet, daß die Transportstrecke in einer zusätzlichen Einschleusestelle (E6) mündet und daß die Steuereinrichtung gewährleistet, daß bei einzuschleusendem Stückgut (GP), das zwei Kippschalen (KS) benötigt, und nur einer leeren Kippschale (KS) das Stückgut (NP) von einer der zu dieser leeren Kippschale (KS) benachbarten Kippschalen (KS) über die jeweils davor befindliche zusätzliche Ausschleusestelle (A1,A2) ausgeschleust wird, das Stückgut (GP) für zwei Kippschalen (KS) auf die dadurch nebeneinander befindlichen leeren Kippschalen (KS) eingeschleust wird und das über die zusätzliche Ausschleusestelle (A1,A2) ausgeschleuste Stückgut (NP) über die Transportstrecke und die zusätzliche Einschleusestelle (E6) auf eine einzelne leere Kippschale (KS) wieder eingeschleust wird.

2. Verfahren zum Sortieren von Stückgut mittels Kippschalensortierern (S), **dadurch gekennzeichnet, daß** vor Einschleusung von zwei Kippschalen (KS) belegenden Stückgütern (GP) bei nur einer leeren Kippschale (KS) eine zu dieser benachbarte, mit einem Stückgut (NP) belegte Kippschale (KS) entleert wird, das zwei Kippschalen (KS) belegende Stückgut (GP) auf die nunmehr zwei leeren, aufeinanderfolgenden Kippschalen (KS) geschleust wird und das zusätzlich entleerte Stückgut (NP) danach wieder auf eine einzelne leere Kippschale (KS) eingeschleust wird.

## Claims

1. Arrangement for sorting articles, having circulating tilting trays, introduction locations for loading the tilting trays, discharge locations for unloading into sorting-specific collecting locations, sensors for determining the loading state of the tilting trays, means for reading the distributing information, and a control device for controlling the sorting operations on the basis of the information received, **characterized in that** located upstream of at least one introduction location (E1-E5) is an additional discharge location (A1, A2) by means of which articles (NP) located just on one tilting tray (KS) are discharged onto a common transporting path with at least one region as an intermediate store (P) driven in start-stop operation, **in that** the transporting path opens out in an additional introduction location (E6), and **in that** the control device ensures that, if an article (GP) which requires two tilting trays (KS) is to be introduced and only one empty tilting tray (KS) is available, the article (NP) from one of the tilting trays (KS) adjacent to this empty tilting tray (KS) is discharged via the additional discharge location (A1, A2) which is located upstream in each case, the article (GP) for two tilting trays (KS) is introduced onto the thus adjacent empty tilting trays (KS), and the article (NP) discharged via the additional discharge location (A1, A2) is introduced onto an empty individual tilting tray (KS) again via the transporting path and the additional introduction location (E6).

2. Method of sorting articles by means of tilting-tray sorters (S), **characterized in that**, prior to the introduction of articles (GP) which occupy two tilting trays (KS), if only one empty tilting tray (KS) is available, a tilting tray (KS) which is adjacent to the latter and is occupied by an article (NP) is emptied, the article (GP) which occupies two tilting trays (KS) is introduced onto the now two empty successive tilting trays (KS) and the additionally emptied article (NP) is then introduced again onto an empty individual tilting tray (KS).

## Revendications

1. Dispositif pour le tri d'articles individuels, comportant des plateaux basculants circulants, des points d'introduction pour le chargement des plateaux basculants, des points d'évacuation pour le déchargement dans des points de collecte conforme au tri, des capteurs pour déterminer l'état de chargement des plateaux basculants, des moyens pour lire les informations de distribution, et une unité de commande pour commander les processus de tri sur la base des informations reçues,
**caractérisé en ce qu'**un point (A1, A2) d'évacuation supplémentaire se trouve avant au moins un point (E1, E5) d'introduction afin d'évacuer des articles (NP) individuels, se trouvant sur un seul plateau (KS) basculant, sur un parcours de transport commun comportant comme stockage (P) intermédiaire au moins une zone entraînée en fonctionnement discontinu (star-stop), **en ce que** le parcours de transport débouche dans un point (E6) d'introduction supplémentaire, et **en ce que** l'unité de commande garantit que, pour un article (GP) individuel à introduire qui a besoin de deux plateaux (KS) basculants, si un seul plateau (KS) basculant est vide, l'article (NP) individuel d'un des plateaux (KS) basculants voisins de ce plateau (KS) basculant vide est évacué par l'intermédiaire du point (A1, A2) d'évacuation supplémentaire se trouvant respectivement en amont, l'article (GP) individuel occupant deux plateaux basculants est introduit sur les plateaux (KS) basculants vides ainsi présents en juxtaposition, et l'article (NP) individuel évacué par l'intermédiaire du point (A1, A2) d'évacuation supplémentaire est réintroduit sur un plateau (KS) basculant isolé vide par l'intermédiaire du parcours de transport et du point (E6) d'introduction supplémentaire.

2. Procédé pour le tri d'articles individuels au moyen de trieurs (S) à plateaux basculants, **caractérisé en ce que**, avant l'introduction d'articles (GP) individuels occupant deux plateaux (KS) basculants alors qu'un seul plateau (KS) basculant est vide, un plateau (KS) basculant voisin de ce plateau vide et chargé d'un article (NP) individuel est vidé, l'article (GP) individuel occupant deux plateaux (KS) basculants est transféré sur les deux plateaux (KS) basculants consécutifs maintenant vides, et l'article (NP) individuel ayant fait l'objet d'une évacuation supplémentaire est ensuite réintroduit sur un plateau (KS) basculant isolé vide.
